# DEMANDE DE BREVET EUROPEEN

(11) **EP 4 318 020 A1**
(43) Date de publication de la demande: **07.02.2024**
(21) Numéro de dépôt: 23188437.0
(22) Date de dépôt: 28.07.2023
(51) Int. Cl.: G01S 5/02, H04B 7/185

(54) **SYSTÈME SATELLITAIRE ET PROCÉDÉ DE GÉOLOCALISATION D'UN ÉMETTEUR RADIOFREQUÉNCE**

(30) Priorité: 04.08.2022 FR 2208076
(71) Demandeur: THALES, 92400 Courbevoie (FR)
(72) Inventeur: PERRIN, Olivier, 31037 TOULOUSE CEDEX 1 (FR); BAUDIN, Roland, 31037 TOULOUSE CEDEX 1 (FR); CORDIER, Patrick, 31037 TOULOUSE CEDEX 1 (FR)
(74) Mandataire: Atout PI Laplace

(57) **Abrégé**

L'invention concerne un satellite configuré pour opérer des communications radiofréquence (RF) à partir d'un ou plusieurs systèmes antennaires. Le satellite comprend en outre un dispositif (200) dédié à la localisation d'équipements RF comprenant :
- une antenne de réception comprenant une pluralité N d'éléments rayonnants (201) configurés pour recevoir un signal RF,
- des moyens analogiques (203, 208) de multiplexage fréquentiel des signaux reçus sur les N éléments rayonnants,
- des moyens d'émission (210) des signaux multiplexés vers une station satellitaire au sol.

L'invention porte également sur un système satellitaire complet comprenant en outre une station satellitaire et des moyens de calcul configurés pour recevoir les signaux multiplexés, les démultiplexer et mettre en oeuvre des traitements de goniométrie pour déterminer la position de l'équipement RF à localiser, et sur le procédé de localisation associé.

## Description

### Domaine technique :

L'invention se situe dans le domaine de la géolocalisation par satellite d'émetteurs radiofréquence (RF), et porte plus particulièrement sur un système et procédé de géolocalisation d'un émetteur radiofréquence opéré par un système impliquant un satellite de communications conventionnel.

### Technique antérieure :

Les communications par satellite sont en plein essor, mais sont de plus en plus fréquemment brouillées par des équipements radiofréquence émettant des signaux dans la bande de fréquence du canal de communication, soit involontairement par des équipements en lien avec d'autres satellites, soit volontairement par des équipements visant à perturber les communications satellitaires.

Pour l'opérateur du satellite, il est utile de connaître la direction d'arrivée du signal brouilleur, afin de localiser l'équipement au sol à l'origine des émissions interférentes, et de prendre toutes les mesures nécessaires pour revenir à un fonctionnement nominal du système de communications.

La détermination de la position d'un émetteur radiofréquence depuis un satellite peut être faite en utilisant un procédé d'écartométrie. Ce concept, largement utilisé dans les radars pour localiser les cibles, est basé sur la formation de trois faisceaux à partir de trois antennes, d'une antenne réseau ou d'une source d'écartométrie spécifique :
- une voie somme,
- deux voies différences, dans deux axes orthogonaux, typiquement les axes Est-Ouest et Nord-Sud.

Cette solution permet d'atteindre de très bonnes performances de précision de localisation, mais sur une couverture angulaire très faible, de l'ordre de quelques dixièmes de degré. Elle est donc principalement destinée à des applications telles que la compensation du dépointage des satellites, et n'est pas adaptée à la localisation d'un émetteur sur l'ensemble de la zone de couverture d'un satellite, qui est typiquement d'une dizaine de degrés.

Par ailleurs, cette solution n'est pas compatible avec la présence d'un signal de trafic co-fréquence (c'est-à-dire la transmission simultanée d'un signal de trafic et d'un signal interférent dans le même canal fréquentiel) puisque seul le signal d'intérêt doit être présent.

La détermination de la position des émetteurs radiofréquence par des traitements de goniométrie radio, qui consistent à acquérir un même signal depuis plusieurs antennes et/ou capteurs puis à mettre en oeuvre des traitements afin de déterminer la direction d'arrivée de ce signal, est plus adaptée à la localisation d'un brouilleur sur l'ensemble de la zone de couverture d'un satellite, d'autant que ces traitements sont compatibles avec les émissions co-fréquence. Cependant, ils nécessitent un satellite configuré pour recevoir les signaux RF émis par le brouilleur, les transposer en fréquence, les numériser et les traiter dans un calculateur bord. Si ce type de solution est classique, il présente cependant le défaut d'être contraignant en temps de développement et d'être couteux, car il requiert le développement, l'intégration et la validation de chaînes de conversion/numérisation des signaux et d'un calculateur bord dédié à la fonction de goniométrie. En outre, cette solution augmente de manière significative la consommation du satellite.

Une autre solution connue est de recevoir les signaux radiofréquence à bord du satellite, de les transposer en fréquence, de les numériser à bord, puis de les envoyer au sol pour la réalisation des traitements de géolocalisation. La transmission des signaux au sol peut se faire par exemple en utilisant le lien de télémesure/télécommande du satellite. Cette solution évite le développement d'un calculateur à bord du satellite, mais nécessite toujours l'emport de chaînes de conversion et de numérisation à bord du satellite, ce qui requiert un temps important pour le développement, l'intégration et la validation, et a donc un coût élevé.

Pour pallier ces inconvénients, un objet de l'invention est de proposer une solution permettant la géolocalisation d'un émetteur radiofréquence depuis un satellite « conventionnel », ne nécessitant pas le développement d'équipements spécifiques à la fonction de localisation. Cette solution a pour but d'accélérer le développement et l'intégration des satellites de communication, et d'en diminuer les coûts.

Pour cela, elle s'appuie sur deux éléments :
- la transmission vers le sol des signaux radiofréquence reçus à partir d'équipements analogiques ne nécessitant pas de développements spécifiques,
- la mise en oeuvre au sol des traitements de goniométrie.

### Résumé de l'invention :

A cet effet, la présente invention décrit un satellite configuré pour opérer des communications radiofréquence à partir d'un ou plusieurs systèmes antennaires. Le satellite selon l'invention comprend en outre un dispositif dédié à la localisation d'équipements RF. Il comprend :
- une antenne de réception comprenant une pluralité N d'éléments rayonnants configurés pour recevoir un signal RF,
- des moyens analogiques de multiplexage fréquentiel des N signaux RF reçus sur les N éléments rayonnants, configurés pour transposer lesdits N signaux RF reçus sur les N éléments rayonnants autour de fréquences centrales distinctes réparties dans une bande de fréquence donnée et pour les combiner, et
- des moyens d'émission des N signaux RF multiplexés fréquentiellement vers une station satellitaire au sol pour la mise en oeuvre de traitements de goniométrie.

Selon un mode de réalisation de l'invention, les moyens analogiques de multiplexage fréquentiel des N signaux RF reçus sur les N éléments rayonnants comprennent N filtres passe-bande analogiques ayant des largeurs de bandes passantes sensiblement identiques et N moyens de transposition analogiques configurés pour transposer lesdits signaux de sorte que l'écart entre deux fréquences centrales de signaux transposés soit supérieur ou égal à la largeur de bande passante des N filtres passe-bande analogiques.

Avantageusement, le satellite est configuré de sorte que la bande de fréquences dans laquelle sont retransmis les N signaux RF multiplexés fréquentiellement soit réservée pour ces retransmissions.

Selon un mode de réalisation du satellite selon l'invention, le nombre N d'éléments rayonnants de l'antenne de réception du dispositif dédié à la localisation d'équipements RF est inférieur à 10.

L'invention décrit également un système de communications satellitaires permettant la localisation d'un émetteur radiofréquence comprenant un satellite selon l'invention, et une ou plusieurs stations satellitaires au sol, le satellite et les stations étant configurés pour permettre ensemble la calibration du système par :
- l'émission d'un signal de calibration depuis une station satellitaire dont la position est connue,
- la réception dudit signal de calibration sur une pluralité d'éléments rayonnants, le multiplexage fréquentiel des signaux de calibration reçus sur ladite pluralité d'éléments rayonnants et la réémission des signaux de calibration multiplexés fréquentiellement, par le dispositif dédié à la localisation d'équipements RF du satellite,
- la réception, par une station satellitaire, des signaux de calibration multiplexés fréquentiellement réémis par le satellite,
- le démultiplexage et la numérisation des signaux de calibration, et la mise en oeuvre de traitements de goniométrie sur les signaux de calibration démultiplexés et numérisés, de manière à calculer :
   ∘ une direction d'arrivée du signal de calibration,
   ∘ une position de la station satellitaire émettant le signal de calibration, puis
   ∘ un écart de calibration entre la position connue de la station satellitaire émettant le signal de calibration et la position de la station satellitaire émettant le signal de calibration déterminée à l'aide des traitements de goniométrie
   puis pour permettre ensemble la détermination de la position d'un équipement RF émettant un signal interférent par :
- la réception d'un signal RF comprenant ledit signal interférent sur une pluralité d'éléments rayonnants, le multiplexage fréquentiel des signaux RF reçus sur ladite pluralité d'éléments rayonnants et la réémission des signaux RF multiplexés fréquentiellement, par le dispositif dédié à la localisation d'équipements RF du satellite,
- la réception, par une station satellitaire, des signaux RF multiplexés fréquentiellement émis par le dispositif dédié la localisation d'équipements RF du satellite,
- le démultiplexage et la numérisation desdits signaux RF multiplexés fréquentiellement, la mise en oeuvre d'un algorithme de goniométrie sur les signaux RF démultiplexés et numérisés de manière à déterminer une direction d'arrivée du signal interférent, le calcul d'une position de l'équipement RF émettant ledit signal interférent, et la correction de la position calculée par l'écart de calibration.

Enfin, l'invention porte sur un procédé de détermination de la position d'un équipement de radiofréquence dans un système de communications satellitaires comprenant un satellite tel que décrit précédemment, et une ou plusieurs stations satellitaires au sol. Le procédé comprend :
- une étape de calibration dudit système de communications satellitaires, par :
   ∘ une sous-étape d'émission d'un signal de calibration depuis une station satellitaire dont la position est connue,
   ∘ une sous-étape de réception du signal de calibration sur une pluralité d'éléments rayonnants, de multiplexage fréquentiel des signaux de calibration reçus sur ladite pluralité d'éléments rayonnants et de réémission des signaux de calibration multiplexés fréquentiellement, par le dispositif dédié à la localisation d'équipements RF du satellite,
   ∘ une sous-étape de réception, par une station satellitaire, des signaux de calibration multiplexés fréquentiellement réémis par le satellite,
   ∘ une sous-étape de démultiplexage et de numérisation desdits signaux de calibration, et de mise en oeuvre de traitements de goniométrie sur les signaux de calibration démultiplexés et numérisés, de manière à déterminer une direction d'arrivée du signal de calibration, une position de la station satellitaire émettant le signal de calibration, puis un écart de calibration entre la position connue de la station satellitaire émettant le signal de calibration et la position de la station satellitaire émettant le signal de calibration déterminée à l'aide des traitements de goniométrie ;
- une ou plusieurs étapes de détermination de la position d'un émetteur RF émettant un signal interférent, par :
   ∘ une sous-étape de réception d'un signal RF comprenant ledit signal interférent sur une pluralité d'éléments rayonnants, de multiplexage fréquentiel des signaux RF reçus sur ladite pluralité d'éléments rayonnants et de réémission des signaux RF multiplexés fréquentiellement, par le dispositif dédié à la localisation d'équipements RF du satellite,
   ∘ une sous-étape de réception, par une station satellitaire, des signaux RF multiplexés fréquentiellement émis par le dispositif dédié à la localisation d'équipements RF du satellite,
   ∘ une sous-étape de démultiplexage et de numérisation desdits signaux RF multiplexés fréquentiellement, puis de mise en oeuvre de traitements de goniométrie sur les signaux RF démultiplexés et numérisés de manière à déterminer une direction d'arrivée du signal interférent, de calcul d'une position de l'équipement radiofréquence émettant ledit signal interférent, et de correction de la position calculée par l'écart de calibration.

### Brève description des figures :

L'invention sera mieux comprise et d'autres caractéristiques, détails et avantages apparaîtront mieux à la lecture de la description qui suit, donnée à titre non limitatif, et grâce aux figures annexées, données à titre d'exemple, où :
- la figure 1 représente un exemple de système de transmissions satellitaires adapté pour la mise en oeuvre de l'invention ;
- la figure 2 représente un mode de réalisation d'un dispositif dédié à la localisation d'équipements RF embarqué sur un satellite de manière à mettre en oeuvre de l'invention ;
- la figure 3 est un diagramme synoptique représentant les étapes d'un procédé de localisation d'un équipement radiofréquence selon un mode de réalisation de l'invention.

Des références identiques peuvent être utilisées dans des figures différentes lorsqu'elles désignent des éléments identiques ou comparables.

### Description détaillée :

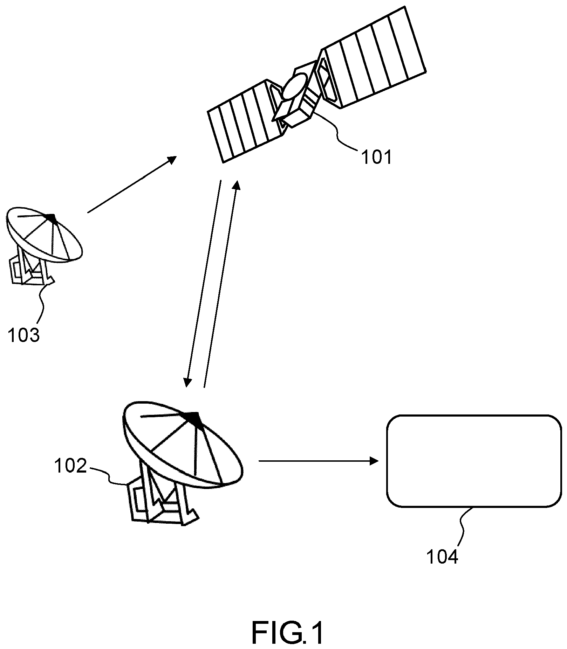

La figure 1 représente un exemple de système de transmissions satellitaires adapté pour la mise en oeuvre de l'invention. Il comprend un satellite 101 configuré pour opérer des communications radiofréquence, comme par exemple un satellite diffusant de la télévision numérique, un satellite de téléphonie, un satellite d'observation, un satellite pour système de positionnement par satellite (GNSS), ou n'importe quel autre type de satellite. Le satellite peut indifféremment être géostationnaire ou défilant. Il peut par exemple être configuré pour émettre/recevoir dans la bande de fréquence C (de 3.4 GHz à 7.075 GHz), Ku (de 10.70 GHz à 12.75 GHz) et/ou Ka (de 20 GHz à 30 GHz).

Le satellite 101 est généralement commandé par une passerelle satellitaire telle que la station 102, à travers un lien bidirectionnel de Télécommande et Télémesure (TC/TM). Il est configuré pour recevoir/envoyer des données depuis/vers une ou plusieurs stations satellitaires, comme la station 102 et/ou d'autres stations au sol. Cette configuration correspond à un système satellitaire selon l'état de l'art, configuré pour opérer une ou plusieurs missions de communications, et des variations évidentes peuvent y être apportées, par exemple en opérant le lien de télécommande et le lien de télémesure depuis deux stations différentes.

Le système satellitaire selon l'invention se distingue de l'état de l'art en ce que le satellite 101 est en outre configuré pour permettre la localisation d'un équipement radiofréquence tel que l'émetteur 103, dont les émissions sont susceptibles de perturber celles du satellite, que ce soit volontairement ou involontairement. Il peut s'agir par exemple d'un émetteur mal orienté appartenant à un système de communications tiers, d'une station satellitaire du système dont les émissions ne sont pas maîtrisées, ou d'un équipement spécifiquement conçu pour perturber la liaison montante vers le satellite (brouilleur).

Pour réaliser cette fonction de localisation, le satellite comprend, en plus d'un ou plusieurs systèmes antennaires et équipements lui permettant d'opérer sa ou ses fonctions principales de communications, un dispositif permettant au système d'assurer une fonction de localisation des équipements radiofréquence interférents. Ce dispositif est configuré pour recevoir des signaux RF sur une pluralité d'éléments rayonnants d'une antenne réseau, pour les multiplexer fréquentiellement, puis pour les retransmettre vers une station sol dans une bande de fréquences donnée, qui peut être différente de la bande de fréquence des signaux reçue. Une station sol comprenant des moyens de calcul ou reliée à un équipement 104 comprenant des moyens de calculs est configurée pour recevoir ces signaux, les démultiplexer et mettre en oeuvre des traitements de goniométrie afin de localiser l'équipement radiofréquence interférent. Dans la figure 1, la station au sol en charge de la réception des signaux multiplexés est la station 102 opérant le lien de télécommande télémesure, mais n'importe quelle station au sol pourrait être en mesure de récupérer ces signaux et de les traiter.

Lorsque les traitements de goniométrie, et éventuellement le démultiplexage des signaux, sont réalisés par des moyens de calcul 104 distincts de la station satellitaire 102, celle-ci est alors en charge de la numérisation des signaux, éventuellement de leur démultiplexage, puis de leur transmission à l'équipement 104.

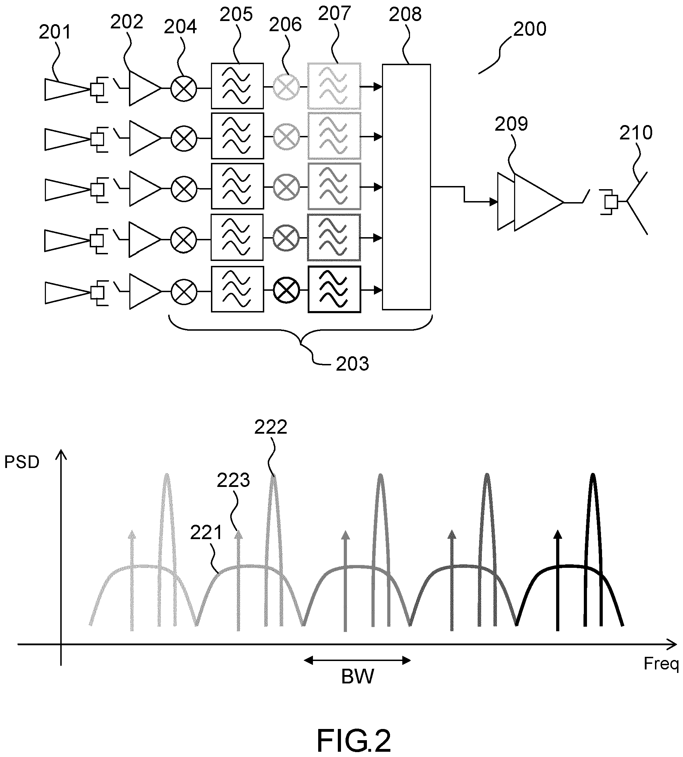

Le haut de la figure 2 représente un mode de réalisation d'un dispositif 200 dédié à une fonction de localisation d'équipements RF, embarqué sur un satellite. Il permet la retransmission à une station au sol des signaux analogiques reçus sur différents éléments rayonnants d'une antenne. Dans l'exemple de la figure 2, et de manière non limitative, le dispositif est configuré pour être embarqué sur un satellite de communications pour lequel le lien montant est opéré en bande Ku. Dans cette bande peuvent figurer les signaux de trafic utile associés à la mission principale de communications du satellite, ainsi qu'un ou plusieurs signaux interférents, ou brouilleurs. Le lien descendant, dans lequel sont renvoyés les signaux multiplexés fréquentiellement, est opéré dans la bande Ka. Ces deux bandes sont mentionnées à titre d'illustration seulement.

Le dispositif 200 dédié à la fonction de localisation comprend une antenne réseau, avec ou sans réflecteur parabolique, et une pluralité N d'éléments rayonnants 201 configurés pour permettre la réception d'un signal dans une bande de fréquence donnée, ici la bande Ku. Chaque signal peut être traité par un ou plusieurs étages d'amplification faible bruit 202 et de filtrage, afin de réduire le bruit présent sur les signaux reçus.

Le dispositif 200 comprend également des moyens analogiques 203 de multiplexage fréquentiel des N signaux reçus. Ces moyens de multiplexage peuvent par exemple comprendre :
- N moyens de transposition analogiques 204 identiques, configurés pour transposer les signaux de leur bande de fréquence vers une bande de fréquence commune à la manière de répéteurs, par exemple à une fréquence donnée dans la bande Ka pour leur retransmission vers le sol,
- N filtres passe-bande analogiques 205 identiques, configurés pour limiter à une largeur BW la largeur de bande des N signaux acquis sur les éléments rayonnants 201 et pour rejeter les harmoniques pouvant résulter de la transposition de fréquence 204,
- N moyens de transposition analogiques 206, configurés pour transposer les signaux de la bande de fréquence commune en leur appliquant à chacun un décalage de fréquence (offset) unique afin qu'ils soient répartis dans une bande de fréquence donnée, de préférence de manière régulière. Le décalage de fréquence entre les signaux est tel que l'écart entre deux fréquences centrales de signaux transposés est supérieur ou égal à la largeur de bande passante BW de chacun des N filtres passe-bande analogiques 205,
- un combineur 208 de signaux analogiques à N entrées et une sortie, configuré pour sommer les N signaux filtrés et transposés, afin de générer un signal correspondant au multiplexage fréquentiel des N signaux.

Les moyens analogiques de multiplexage 203 peuvent également comprendre N filtres passe-bande analogiques 207, centrés autour des fréquences centrales des signaux transposés, de manière à rejeter d'éventuels harmoniques liés à la transposition de fréquence 206.

De manière équivalente, la transposition analogique peut être réalisée en une seule étape par les moyens de transposition analogiques 206, auquel cas les éléments 204 et 205 ne sont plus nécessaires.

D'autres arrangements équivalents sont possibles et produiraient des résultats équivalents, par exemple en inversant les positions des filtres et des moyens de transposition, en ajoutant d'autres filtres analogiques, et/ou en réalisant plus d'étapes de transposition du signal.

Le dispositif 200 dédié à la localisation d'équipements RF embarqué sur le satellite comprend enfin un amplificateur de puissance 209 et des moyens d'émission 210 tels qu'une antenne de transmission.

Le bas de la figure 2 est une représentation fréquentielle des signaux retransmis par le satellite. L'axe des abscisses représente la fréquence, et l'axe des ordonnées la densité spectrale de puissance (en Anglais PSD pour Power Spectral Density) des signaux transmis. Dans cet exemple, le dispositif 200 dédié à la localisation comprend cinq éléments rayonnants. Chaque élément rayonnant reçoit un signal qui comprend une partie de signal utile 221 et une partie de signal interférent 222. Les cinq signaux sont filtrés et transposés fréquentiellement, de sorte que les signaux aient des largeurs de bandes passantes BW équivalentes, et que chaque signal ait une fréquence centrale 223 distante d'au moins BW de celle des autres signaux. Avantageusement, les fréquences centrales sont équiréparties dans une bande de fréquences donnée, dont la largeur est supérieure ou égale à *N* ∗ *BW.* Sur la figure 2, les éléments spécifiques à un signal sont représentés dans des niveaux de gris différents.

La station satellitaire 102 au sol recevant les signaux multiplexés est configurée pour les numériser, les démultiplexer, et mettre en oeuvre des traitements de goniométrie permettant de déterminer la direction d'arrivée du signal interférent, et par conséquent la position de l'émetteur RF, ou pour transmettre les signaux numérisés, multiplexés ou non, à des moyens de calculs 104 configurés pour déterminer la position de l'émetteur RF. Elle comprend donc à minima une antenne de réception avec un ou plusieurs éléments rayonnants, un ou plusieurs amplificateurs faible bruit associés à un ou plusieurs filtres passe bande, et un convertisseur analogique vers numérique. La numérisation peut se faire :
- sur le signal reçu, qui comprend l'ensemble des signaux multiplexés, soit directement sur la fréquence porteuse à laquelle est transmis le signal, soit après transposition autour d'une fréquence porteuse plus adaptée à sa numérisation, auquel cas les signaux multiplexés sont ensuite séparés à l'aide de filtres numériques, ou
- indépendamment pour chacun des signaux multiplexés, en les séparant à partir de leur fréquence porteuse à l'aide de convertisseurs de fréquence et de filtres analogiques, puis en les numérisant séparément.

Ainsi, les traitements de goniométrie peuvent être mis en oeuvre sur l'ensemble des signaux acquis par les N éléments rayonnants 201 du dispositif 200 dédié à la localisation du satellite, afin de localiser le ou les émetteurs RF de signaux interférents.

A cet effet, de nombreux algorithmes de goniométrie sont connus. Les plus adaptés sont les traitements dits de « haute résolution », tel que par exemple l'algorithme MUSIC (acronyme anglais pour MUltiple Slgnal Classification), ESPRIT (acronyme anglais pour Estimation of Signal Parameter via Rotational Invariance Technique), MinNorm (acronyme anglais pour Minimum Norm), qui permettent de déterminer la direction d'arrivée d'un ou de plusieurs signaux acquis par plusieurs capteurs avec une très grande précision, mais tous types d'algorithmes de goniométrie multisources sont envisageables. Pour cela, les signaux interférents peuvent être caractérisés par exemple par leur largeur de bande, leur puissance, leurs instants ou fréquences d'émission, leur forme d'onde, etc... Connaissant la position et l'orientation du satellite, il est possible de déterminer la position de l'équipement radio à l'origine du signal interférent à partir de la direction d'arrivée des signaux.

Tous types de traitements supplémentaires destinés à améliorer la qualité des signaux transmis peuvent avantageusement être mis en oeuvre pour corriger les transformations vues par le signal au cours de sa transmission entre l'équipement interférent, le satellite et la station satellitaire de réception au sol, comme par exemple les erreurs de pointage satellite, l'effet Doppler, les variations de la fonction de transfert en fonction de la fréquence, la compensation des non linéarités des amplificateurs, la compensation des écarts de fréquence, les décalages de synchronisation temporels, etc... Ces compensations permettent d'améliorer la qualité des signaux traités par l'algorithme de goniométrie, et donc la précision de la fonction de localisation.

Le dispositif 200 dédié à la localisation embarqué sur le satellite 101 est totalement analogique, ce qui lui permet de pouvoir être implémenté sans requérir de développements, intégration et tests d'un calculateur bord spécifiquement dédié à la fonction de localisation. Cependant, les équipements analogiques du dispositif présentent nécessairement des imperfections venant affecter la qualité de la localisation, c'est pourquoi une phase préliminaire de calibration est nécessaire pour garantir la performance de la fonction de localisation du système. En effet, en l'absence de calibration, les imperfections des équipements traversés par les signaux lors de leurs traitements dans le satellite, ou les imprécisions sur l'orientation du satellite sont susceptibles d'engendrer des erreurs de positionnement pouvant aller jusqu'à plusieurs degrés d'écart.

La calibration du système se fait par l'émission d'un signal spécifique depuis une station au sol dont la position est connue de manière précise (géoréférencée ou obtenue à l'aide d'un dispositif de positionnement par satellite comme un récepteur GNSS (sigle anglais pour *Global Navigation Satellite Systems,* ou géolocalisation et navigation par un système de satellites)). Le signal peut par exemple être un signal de type AWG (sigle anglais pour *Arbitrary Waveform Generator*), étalé dans l'ensemble d'une bande d'analyse, mais n'importe quel type de signal peut être utilisé à condition qu'il possède de bonnes propriétés d'autocorrélation. Le satellite 101 retransmet à une station satellitaire du système les signaux reçus par les éléments rayonnants de son dispositif 200 dédié à la localisation, après les avoir multiplexé fréquentiellement. La station au sol 102, éventuellement reliée à des moyens de calcul déportés 104, est configurée pour numériser et démultiplexer les signaux reçus, et mettre en oeuvre des traitements de goniométrie afin de localiser la station sol émettant le signal de calibration. L'erreur entre la position connue de la station sol émettant le signal de calibration et sa position déterminée grâce à la fonction de localisation constitue la correction à apporter aux prochaines mesures de positions.

La calibration peut être réalisée une seule fois, au début de l'exploitation du satellite ou à chaque mise en oeuvre de la fonction de localisation par le système satellitaire. Elle peut avantageusement être renouvelée de manière régulière afin de s'adapter aux variations des caractéristiques du dispositif 200 embarqué dans le satellite. Des mesures successives peuvent être réalisées afin de moyenner l'écart de calibration pour réduire les éventuelles erreurs de mesures liées par exemple au bruit blanc ou à la propagation.

Le système satellitaire selon l'invention permet la localisation précise d'un équipement radiofréquence en s'appuyant sur deux principes :
- un dispositif 200 embarqué dans le satellite 101 permettant l'acquisition d'un signal radiofréquence sur plusieurs éléments rayonnants,
- la transmission des signaux acquis sur les éléments rayonnants du satellite vers une station sol 102 pour la mise en oeuvre de traitements de goniométrie.

Cette solution répond au problème posé dans la mesure où il n'est pas nécessaire de développer des équipements spécifiques à bord pour numériser les signaux reçus et intégrer les traitements nécessaires à la fonction de localisation. En effet, les seuls équipements nécessaires à bord du satellite sont des équipements analogiques connus opérant des fonctions classiques ne nécessitant pas de développement matériel particulier et aucun développement logiciel. Il s'agit en l'espèce d'une série de répéteurs analogiques disposés en parallèle, dont la fréquence cible permet le multiplexage fréquentiel des signaux lorsque leurs sorties sont reliées à un combineur de signaux. Le plan de développement d'une telle solution est donc extrêmement court et peu coûteux car il réduit considérablement les étapes de conception, validation et qualification du système, ce qui le rend compatible avec les plannings courts généralement requis pour les systèmes de télécommunications classiques, avec de faibles coûts de développement.

La solution peut être adaptée à n'importe quel satellite de télécommunications, puisqu'elle est réalisée à l'aide d'un dispositif supplémentaire 200 propre à la fonction de localisation. En effet, l'utilisation à des fins de localisation des antennes assurant les autres fonctions du satellite n'est généralement pas possible :
- lorsque le satellite est muni d'une antenne satellitaire classique à réflecteur, avec un seul élément rayonnant, il n'est pas possible de mettre en oeuvre des traitements de goniométrie car l'information de direction d'arrivée extraite par goniométrie est portée par le déphasage entre les signaux reçus de différentes voies constituant le réseau antennaire,
- lorsque le satellite dispose d'une antenne réseau, la mise en oeuvre de l'invention pourrait être possible. Cependant, les performances de gain minimal requises pour assurer les bilans de liaison font que ces antennes disposent d'un très grand nombre d'éléments rayonnants (typiquement une cinquantaine ou plus). Ce nombre élevé résulte de la nécessité d'obtenir une surface antenne suffisante, et de la limitation de la taille des éléments rayonnants compte tenu des lobes de réseau. La mise en oeuvre de traitements de goniométrie sur la totalité de ces éléments rayonnants pour assurer la fonction de localisation serait sous-optimale car le multiplexage fréquentiel des signaux reçus sur chacun des éléments rayonnants utiliserait une bande passante importante suite au multiplexage fréquentiel mis en oeuvre. La mise en oeuvre de la fonction de localisation sur une sous-partie de ces éléments rayonnants permettrait de limiter la bande consommée. Cependant, les antennes sont adaptées en fonction des spécifications propres à leur fonction. Des spécifications différentes pour les fonctions de communication (directivité, rapport signal sur interférence C/I, isolation, ...) et de localisation (nombre d'interférents à localiser, précision angulaire, ...) se traduisent généralement par des définitions optimales différentes des antennes, notamment en ce qui concerne la maille du réseau. De ce fait, les performances d'une fonction de localisation résultant des traitements de goniométrie mis en oeuvre sur des acquisitions faites par une antenne de communications seraient sous-optimales.

Introduire sur le satellite un dispositif antennaire 200 propre à la fonction de localisation permet d'adapter leur nombre, taille, forme et position des éléments rayonnants à la couverture recherchée pour la fonction de localisation, de manière à présenter un gain suffisant sur cette couverture sans générer d'ambiguïtés de direction d'arrivée (phénomène proche des lobes de réseau pour une formation de faisceau). Le nombre d'éléments rayonnants dépend du nombre d'émetteurs à localiser. Un ordre de grandeur consiste à utiliser deux fois plus d'éléments rayonnants que d'émetteurs à localiser simultanément, c'est pourquoi il doit être supérieur à 2, et est typiquement inférieur à 10, et avantageusement inférieur ou égal à 6.

Le dispositif supplémentaire 200 n'a qu'un faible surcout en charge utile sur le satellite puisque le nombre d'éléments rayonnants de l'antenne du dispositif dédié à la fonction de localisation peut être très réduit.

Le multiplexage des signaux dans le domaine fréquentiel présente un cout en bande passante proportionnel au nombre d'éléments rayonnants utilisés par le dispositif 200, puisque la largeur de bande passante nécessaire à la fonction de localisation est au minimum de *N* ∗ *BW.* Cependant, le multiplexage fréquentiel est préféré à un multiplexage temporel car le multiplexage temporel devrait être réalisé :
- soit par la mise en oeuvre de lignes à retard sur chacune des voies à bord du satellite, ce qui entraîne un cout en surface et en masse,
- soit par l'acquisition de signaux sur les différents éléments à des moments distincts, ce qui n'est pas compatible avec les exigences des algorithmes de goniométrie.

En outre, la bande de fréquence descendante est généralement plus élevée que la montante, avec plus de disponibilité en bande passante, ce qui est avantageux pour le multiplexage fréquentiel.

Un autre avantage de la solution proposée réside dans sa flexibilité et son évolutivité : les traitements de goniométrie sont mis en oeuvre au sol, ce qui supprime toutes les contraintes d'intégration, la complexité de mise en oeuvre, les problèmes de consommation et le coût. En outre, les mises à jour du logiciel de traitement sont nettement plus aisées au sol que dans un calculateur à bord du satellite.

L'invention porte donc sur un satellite disposant d'un dispositif 200 dédié à la localisation tel que décrit précédemment, ainsi que sur un système comprenant un satellite 101 selon l'invention et une ou plusieurs stations 102 au sol. Les stations au sol et le satellite sont configurés pour permettre ensemble la calibration du système par :
- l'émission d'un signal de calibration depuis une station satellitaire dont la position est connue,
- la réception du signal de calibration sur une pluralité d'éléments rayonnants, le multiplexage fréquentiel des signaux de calibration reçus sur lesdits éléments rayonnants et la réémission des signaux de calibration multiplexés fréquentiellement, par le dispositif dédié à la localisation d'équipements RF du satellite,
- la réception, par la station satellitaire à l'origine de la transmission du signal de calibration ou par une autre station satellitaire 102 au sol, des signaux de calibration multiplexés fréquentiellement réémis par le satellite,
- la numérisation et le démultiplexage de ces signaux, et la mise en oeuvre de traitements de goniométrie sur les signaux de calibration démultiplexés et numérisés, de manière à déterminer une direction d'arrivée du signal de calibration, par la station au sol ayant reçu les signaux, éventuellement associée à des moyens de calculs 104 auxquels elle est reliée. Cette direction d'arrivée est ensuite utilisée pour déterminer la localisation de la station émettant le signal de calibration en l'associant à la position et à l'orientation du satellite, puis un écart de calibration entre la position connue de la station satellitaire émettant le signal de calibration et la position déterminée par les traitements de goniométrie est mesuré.

Les équipements du système sont également configurés pour permettre ensemble la détermination de la position d'un équipement radiofréquence RF 103 à l'origine d'un signal interférent par :
- l'acquisition d'un signal RF comprenant le signal interférent sur une pluralité d'éléments rayonnants, le multiplexage fréquentiel des signaux RF reçus sur lesdits éléments rayonnants et la réémission des signaux RF multiplexés fréquentiellement, par le dispositif dédié à la localisation d'équipements RF du satellite,
- la réception, par une station satellitaire 102, des signaux RF multiplexés fréquentiellement émis par le satellite,
- le démultiplexage et la numérisation desdits signaux RF, par la station satellitaire 102 ou des moyens de calculs 104 auxquels elle est reliée, la mise en oeuvre de traitements de goniométrie sur les signaux RF démultiplexés et numérisés pour déterminer une direction d'arrivée du signal interférent, le calcul d'une position de l'équipement interférent 103 en utilisant la direction d'arrivée du signal interférent, la position du satellite 101 et son orientation, et la correction de cette position par l'écart de calibration calculé lors de la phase de calibration.

L'invention porte également sur un procédé de détermination de la position d'un équipement RF dans un système satellitaire selon l'invention.

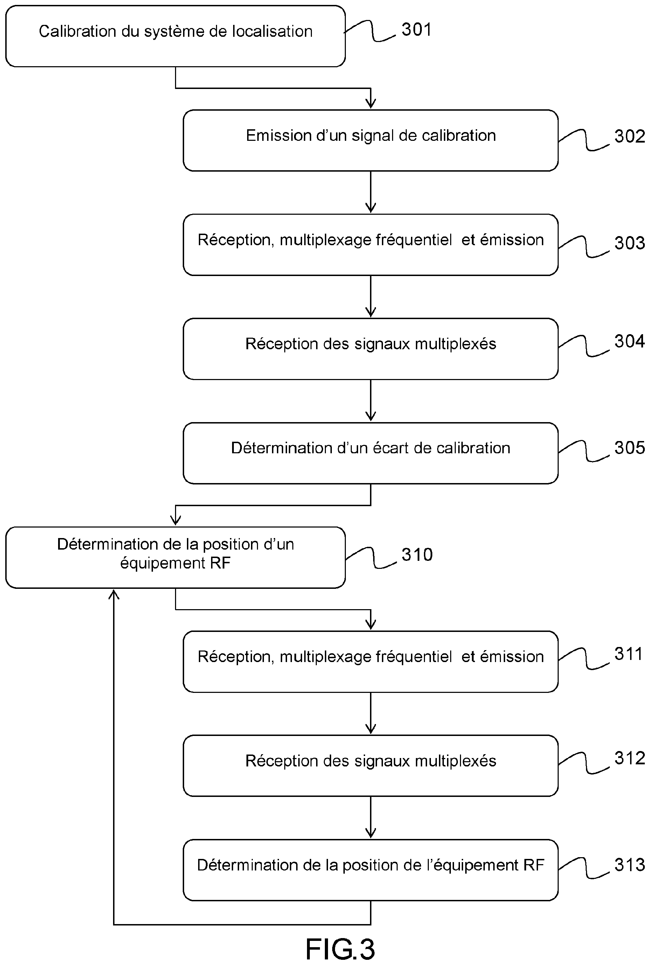

La figure 3 est un synoptique des étapes d'un procédé de localisation dans un système satellitaire selon l'invention. Il est mis en oeuvre dans un système de communications satellitaire comprenant un satellite tel que le satellite 101, intégrant un dispositif 200 permettant d'acquérir un signal sur une pluralité d'éléments rayonnants, puis de les retransmettre à une station sol pour la mise en oeuvre de traitements de goniométrie. Le procédé comprend :
- une étape 301 de calibration du système de communications satellitaires. Cette étape comprend :
   ∘ une sous-étape 302 d'émission d'un signal de calibration depuis une station satellitaire dont la position est connue,
   ∘ une sous-étape 303 de réception du signal de calibration sur une pluralité d'éléments rayonnants, de multiplexage fréquentiel des signaux de calibration reçus sur lesdits éléments rayonnants et de réémission des signaux de calibration multiplexés fréquentiellement, par le dispositif dédié à la localisation d'équipements RF du satellite,
   ∘ une sous-étape 304 de réception, par une station satellitaire, des signaux de calibration multiplexés fréquentiellement réémis par le satellite,
   ∘ une sous-étape 305, réalisée par la station satellitaire ayant reçu les signaux et/ou un dispositif de traitements auquel les signaux sont transmis, de démultiplexage et de numérisation desdits signaux de calibration, et de mise en oeuvre de traitements de goniométrie sur les signaux de calibration démultiplexés et numérisés, de manière à déterminer une direction d'arrivée du signal de calibration, à calculer une position de la station satellitaire émettant le signal de calibration en utilisant la direction d'arrivée, le positionnement et l'orientation du satellite, puis à calculer un écart de calibration entre la position connue de la station satellitaire émettant le signal de calibration et la position de la station satellitaire émettant le signal de calibration déterminée à l'aide des traitements de goniométrie.

Le procédé selon un mode de réalisation de l'invention, comprend également une ou plusieurs étapes 310 de détermination de la position d'un émetteur RF émettant un signal interférent. Cette étape comprend :
∘ une sous-étape 311 de réception d'un signal RF comprenant le signal interférent sur une pluralité d'éléments rayonnants, de multiplexage fréquentiel des signaux RF reçus par lesdits éléments rayonnants et de réémission des signaux RF multiplexés fréquentiellement, par le dispositif dédié à la localisation d'équipements RF du satellite,
∘ une sous-étape 312 de réception, par une station satellitaire, des signaux RF multiplexés fréquentiellement émis par le satellite,
∘ une sous-étape 313 de démultiplexage et de numérisation desdits signaux RF, de mise en oeuvre d'un algorithme de goniométrie sur les signaux RF démultiplexés et numérisés de manière à déterminer une direction d'arrivée du signal interférent, à calculer une position de l'équipement radiofréquence émettant ledit signal interférent, et de correction de la position calculée par l'écart de calibration, mis en oeuvre par la station satellitaire et/ou des moyens de calcul auxquels elle est reliée.

## Revendications

1. Satellite (101) configuré pour opérer des communications radiofréquence, RF, à partir d'un ou plusieurs systèmes antennaires, **caractérisé en ce qu'**il comprend en outre un dispositif (200) dédié à la localisation d'équipements RF, ledit dispositif dédié à la localisation d'équipements RF comprenant :
- une antenne de réception comprenant une pluralité N d'éléments rayonnants (201) configurés pour recevoir un signal RF,
- des moyens analogiques (203, 208) de multiplexage fréquentiel des N signaux RF reçus sur les N éléments rayonnants, configurés pour transposer lesdits N signaux RF reçus sur les N éléments rayonnants autour de fréquences centrales distinctes réparties dans une bande de fréquence donnée et pour les combiner,
- des moyens d'émission (210) des N signaux RF multiplexés fréquentiellement vers une station satellitaire au sol pour la mise en oeuvre de traitements de goniométrie.

2. Satellite selon la revendication 1, dans lequel les moyens analogiques de multiplexage fréquentiel des N signaux RF reçus sur les N éléments rayonnants comprennent N filtres passe-bande analogiques ayant des largeurs de bandes passantes (BW) sensiblement identiques (205, 207) et N moyens de transposition analogiques (204, 206) configurés pour transposer lesdits signaux de sorte que l'écart entre deux fréquences centrales de signaux transposés soit supérieur ou égal à la largeur de bande passante (BW) des N filtres passe-bande analogiques.

3. Satellite selon l'une des revendications précédentes, configuré de sorte que la bande de fréquences dans laquelle sont retransmis les N signaux RF multiplexés fréquentiellement soit réservée pour ces retransmissions.

4. Satellite selon l'une des revendications précédentes, dans lequel le nombre N d'éléments rayonnants (201) de l'antenne de réception du dispositif (200) dédié à la localisation d'équipements RF est inférieur à 10.

5. Système de communications satellitaires permettant la localisation d'un émetteur radiofréquence, **caractérisé en ce qu'**il comprend un satellite (101) selon l'une des revendications 1 à 4, et une ou plusieurs stations satellitaires au sol (102), configurés pour permettre ensemble la calibration du système par :
- l'émission d'un signal de calibration depuis une station satellitaire (102) dont la position est connue,
- la réception dudit signal de calibration sur une pluralité d'éléments rayonnants (201), le multiplexage fréquentiel (203) des signaux de calibration reçus sur ladite pluralité d'éléments rayonnants et la réémission (210) des signaux de calibration multiplexés fréquentiellement, par le dispositif (200) dédié à la localisation d'équipements RF du satellite,
- la réception, par une station satellitaire (102), des signaux de calibration multiplexés fréquentiellement réémis par le satellite (101),
- le démultiplexage et la numérisation desdits signaux de calibration, et la mise en oeuvre de traitements de goniométrie sur les signaux de calibration démultiplexés et numérisés, de manière à déterminer une direction d'arrivée du signal de calibration, une position de la station satellitaire émettant le signal de calibration, puis un écart de calibration entre la position connue de la station satellitaire (102) émettant le signal de calibration et la position de la station satellitaire (102) émettant le signal de calibration déterminée à l'aide des traitements de goniométrie ;
puis pour permettre ensemble la détermination de la position d'un équipement RF (103) émettant un signal interférent par :
- la réception d'un signal RF comprenant ledit signal interférent sur une pluralité d'éléments rayonnants (201), le multiplexage fréquentiel (203) des signaux RF reçus sur ladite pluralité d'éléments rayonnants et la réémission (210) des signaux RF multiplexés fréquentiellement, par le dispositif (200) dédié à la localisation d'équipements RF du satellite,
- la réception, par une station satellitaire (102), des signaux RF multiplexés fréquentiellement émis par le dispositif (200) dédié à la localisation d'équipements RF du satellite (101),
- le démultiplexage et la numérisation desdits signaux RF multiplexés fréquentiellement, la mise en oeuvre d'un algorithme de goniométrie sur les signaux RF démultiplexés et numérisés de manière à déterminer une direction d'arrivée du signal interférent, le calcul d'une position de l'équipement RF (103) émettant ledit signal interférent, et la correction de la position calculée par l'écart de calibration.

6. Procédé de détermination de la position d'un équipement de radiofréquence (103) dans un système de communications satellitaires comprenant un satellite (101) selon l'une des revendications 1 à 4, et une ou plusieurs stations satellitaires (102) au sol, **caractérisé en ce qu'**il comprend :
- une étape (301) de calibration dudit système de communications satellitaires, par :
∘ une sous-étape (302) d'émission d'un signal de calibration depuis une station satellitaire (102) dont la position est connue,
∘ une sous-étape (303) de réception du signal de calibration sur une pluralité d'éléments rayonnants (201), de multiplexage fréquentiel (203) des signaux de calibration reçus sur ladite pluralité d'éléments rayonnants et de réémission (210) des signaux de calibration multiplexés fréquentiellement, par le dispositif (200) dédié à la localisation d'équipements RF du satellite,
∘ une sous-étape (304) de réception, par une station satellitaire (102), des signaux de calibration multiplexés fréquentiellement réémis par le satellite (101),
∘ une sous-étape (305) de démultiplexage et de numérisation desdits signaux de calibration, et de mise en oeuvre de traitements de goniométrie sur les signaux de calibration démultiplexés et numérisés, de manière à déterminer une direction d'arrivée du signal de calibration, une position de la station satellitaire (102) émettant le signal de calibration, puis un écart de calibration entre la position connue de la station satellitaire (102) émettant le signal de calibration et la position de la station satellitaire (102) émettant le signal de calibration déterminée à l'aide des traitements de goniométrie ;
- une ou plusieurs étapes (310) de détermination de la position d'un émetteur RF (103) émettant un signal interférent, par :
∘ une sous-étape (311) de réception d'un signal RF comprenant ledit signal interférent sur une pluralité d'éléments rayonnants (201), de multiplexage fréquentiel (203) des signaux RF reçus sur ladite pluralité d'éléments rayonnants et de réémission (210) des signaux RF multiplexés fréquentiellement, par le dispositif (200) dédié à la localisation d'équipements RF du satellite,
∘ une sous-étape (312) de réception, par une station satellitaire (102), des signaux RF multiplexés fréquentiellement émis par le dispositif (200) dédié à la localisation d'équipements RF du satellite,
∘ une sous-étape (313) de démultiplexage et de numérisation desdits signaux RF multiplexés fréquentiellement, puis de mise en oeuvre de traitements de goniométrie sur les signaux RF démultiplexés et numérisés de manière à déterminer une direction d'arrivée du signal interférent, de calcul d'une position de l'équipement radiofréquence (103) émettant ledit signal interférent, et de correction de la position calculée par l'écart de calibration.
